# EUROPÄISCHE PATENTSCHRIFT

(11) **EP 0 503 299 B1**
(45) Veröffentlichungstag und Bekanntmachung des Hinweises auf die Patenterteilung: **03.05.1995**
(21) Anmeldenummer: 92102397.4
(22) Anmeldetag: 13.02.1992
(51) Int. Cl.: F16L 55/10

(54) **Verfahren und Vorrichtung zum Einfrieren von flüssigen Medien in Rohrleitungen**
Method and apparatus for freezing fluids in pipelines
Procédé et appareil pour la congélation de fluides dans les tuyaux

(30) Priorität: 08.03.1991 DE 4107456
(43) Veröffentlichungstag der Anmeldung: 16.09.1992
(73) Patentinhaber: MESSER GRIESHEIM GMBH, D-60314 Frankfurt (DE)
(72) Erfinder: Biederbick, Manfred, W-4150 Krefeld (DE); Hartig, Hans, W-4155 Grefrath 1 (DE); Marx, Bodo, W-4156 Willich 1 (DE)

(56) Entgegenhaltungen:
- DE-A- 3 916 025
- US-A- 4 370 862
- US-A- 4 416 118

## Beschreibung

Die Erfindung betrifft ein Verfahren und eine zugehörige Vorrichtung zum Einfrieren von flüssigen Medien in Rohrleitungen nach dem Oberbegriff des Anspruches 1.

Es ist bekannt, Rohrleitungen, in denen flüssige Medien transportiert werden, an bestimmten Stellen einzufrieren, um beispielsweise Reparaturen oder Wartungsarbeiten durchzuführen. Hierbei bildet sich ein Eispfropfen im Innern des Rohres, der den Rohrquerschnitt versperrt und beständig gegen hohe Drücke ist. Die einzugefrierende Stelle wird von einer Manschette umgeben, die mit dem Kühlmedium beaufschlagt wird. Als Kühlmedium werden in erster Linie tiefsiedende verflüssigte Gase, vor allem Stickstoff, verwendet. Das Kühlmedium kann auch ein tiefkaltes Gas sein, welches durch Verdampfen eines tiefsiedenden verflüssigten Gases gewonnen wird. Ein solcher Stand der Technik ist beispielsweise aus der FR-PS 94 489 bekannt.

Bei Verwendung tiefsiedender verflüssigter Gase in flüssigem oder gasförmigen Zustand als Kühlmedium werden die Rohre auf sehr tiefe Temperaturen abgekühlt, die mehr oder weniger nahe am Siedepunkt des verflüssigten Gases liegen, der bei Stickstoff beispielsweise -196° C beträgt. Die unkontrollierte Abkühlung auf solch tiefe Temperaturen ist für manche Rohrwerkstoffe unerwünscht, zum Teil sogar unzulässig, weil die Festigkeitswerte des Rohrwerkstoffes dadurch beeinträchtigt werden können.

Der Erfindung liegt daher die Aufgabe zugrunde, ein Verfahren zum Einfrieren von flüssigen Medien in Rohrleitungen zu schaffen, welches es gestattet, das Einfrieren bei definierten, vorher fest einstellbaren Temperaturen durchzuführen.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Eine Vorrichtung gemäß der Erfindung zur Durchführung des erfindungsgemäßen Verfahrens ist in dem Anspruch 4 angegeben.

Die Erfindung beruht demnach auf dem Gedanken, das Einfrieren mit einem gasförmigen Kühlmedium durchzuführen, welches im Kreislauf durch die Manschette geleitet wird und dessen Temperatur durch geregelte Zufuhr von tiefsiedendem verflüssigten Gas in das Kreislaufgas auf einem vorbestimmten Wert konstant gehalten wird. Hierbei ist wichtig, daß das Kühlmittel die gesamte Rohroberfläche gleichmäßig beaufschlagt. Dies läßt sich z.B. erreichen durch ein Gitter von Gasleitblechen.

Der bevorzugte Temperaturbereich für das Kreislaufgas ist -20°C bis -160°C, insbesondere -20°C bis -80°C. Die Wahl der Temperatur erfolgt unter Berücksichtigung der in den einschlägigen Regelwerken vorgegebenen zulässigen tiefsten Anwendungstemperaturen: Die tiefste Anwendungstemperatur für die verschiedenen Beanspruchungsfälle werden z.B. in Tafel 1, AD-Merkblatt W 10, angegeben. Der Kreislauf wird zweckmäßigerweise mittels eines Ventilators bewerkstelligt, dessen Druck- und Saugseite mit den jeweiligen Anschlüssen der Manschette verbunden sind. Die Zufuhr des tiefsiedenden verflüssigten Gases erfolgt auf der Druckseite, beispielsweise mittels einer Sprühdüse. Eine der eingesprühten Menge an verflüssigtem Gas entsprechende Menge Kühlmedium wird auf der Saugseite durch eine Druckentlastungsklappe entfernt.

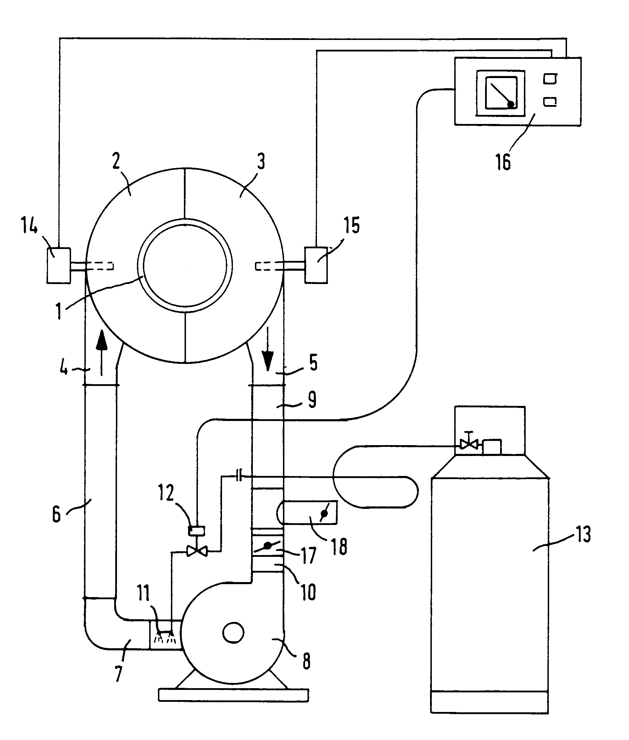

Die Zeichnung veranschaulicht in vereinfachter Form ein Ausführungsbeispiel der Erfindung.

Das einzugefrierende Rohr 1 ist über der gewünschten Länge von den Halbschalen 2 und 3 umgeben, welche die Manschette bilden, durch welche das Kühlmedium geleitet wird. Die Manschette ist mit einem Anschluß 4 für die Zufuhr des Kühlmediums und mit einem Anschluß 5 für die Ableitung des Kühlmediums versehen. Die Strömungsrichtung ist durch nicht bezeichnete Pfeile angegeben. Der Anschluß 4 zur Zufuhr des Kühlmediums ist durch einen Schlauch 6 mit der Druckseite 7 eines Radialventilators 8 verbunden. Entsprechend ist die Saugseite 10 des Radialventilators 8 durch einen Schlauch 9 mit dem Anschluß 5 zur Ableitung des Kühlmediums verbunden.

Zur Aufrechterhaltung einer vorbestimmten Temperatur des Kühlmediums dient gemäß der Erfindung tiefsiedendes verflüssigtes Gas, welches durch eine Sprühdüse 11 in die Druckseite 7 eingeführt wird. Die Zufuhr erfolgt über ein Regelventil 12 aus einem Vorratsbehälter 13 für das tiefsiedende verflüssigte Gas.

In der Nähe der Anschlüsse 4 und 5 sind Temperaturfühler 14 und 15 angeordnet, welche die Temperatur des ein- und abströmenden Kühlmediums erfassen. Die Temperaturfühler 14, 15 sind mit einem Temperaturregler 16 verbunden, der auf das Regelventil 12 einwirkt. Am Temperaturregler 16 wird die gewünschte Temperatur des Kühlmediums eingestellt. Die Zufuhr von tiefsiedendem verflüssigten Gas durch das Regelventil 12 und die Sprühdüse 11 erfolgt danach automatisch. Das Druckniveau des Kreislaufgases wird durch eine ebenfalls auf der Druckseite 7 des Radialventilators 8 angeordnete Gasstauregelklappe 17 eingestellt.

Eine der zugeführten Menge an flüssigem Gas entsprechende Menge verdampften Gases wird durch die Druckentlastungsklappe 18 aus dem Kreislauf entfernt.

Als Kühlmedium wird in der Regel Stickstoff verwendet, doch sind auch andere tiefsiedende verflüssigte Gase und Kohlendioxid geeignet. Auch ein durch ein Kälteaggregat abgekühltes Gas läßt sich als Kühlmedium in Sonderfällen verwenden.

## Patentansprüche

1. Verfahren zum Einfrieren von flüssigen Medien in Rohrleitungen, bei dem ein durch Verdampfen eines tiefsiedenden verflüssigten Gases gewonnenes kaltes gasförmiges Kühlmedium durch eine den einzugefrierenden Rohrabschnitt umfassende Manschette geleitet wird,
dadurch gekennzeichnet,
daß das Kühlmedium mit einstellbaren Temperaturen im Kreislauf durch die Manschette geleitet wird und die Temperatur durch geregelte Zufuhr von tiefsiedendem verflüssigten Gas in das Kreislaufgas, und durch Ableiten einer entsprechenden Menge von gasförmigem Kühlmedium aufrechterhalten wird.

2. Verfahren nach Anspruch 1,
dadurch gekennzeichnet,
daß das Kühlmedium auf Temperaturen zwischen -20°C und -160°C eingestellt wird.

3. Verfahren nach Anspruch 2,
dadurch gekennzeichnet,
daß das Kühlmedium auf Temperaturen zwischen -20°C und -80°C eingestellt wird.

4. Vorrichtung zum Einfrieren von flüssigen Medien in Rohrleitungen mit einem durch Verdampfung eines tiefsiedenden verflüssigten Gases gewonnenem kalten gasförmigen Kühlmedium nach einem der Ansprüche 1 bis 3, bestehend aus einer den einzugefrierenden Rohrabschnitt umfassenden Manschette zur Beaufschlagung der Rohroberfläche mit dem Kühlmedium, welche Anschlüsse (4,5) zur Zufuhr und Ableitung des Kühlmediums besitzt,
dadurch gekennzeichnet,
daß der Anschluß (4) für die Zufuhr des Kühlmediums mit der Druckseite (7) und der Anschluß (5) für die Ableitung des Kühlmediums mit der Saugseite (10) eines Ventilators (8) verbunden sind, wobei die Druckseite Mittel zur regelbaren Zufuhr von tiefsiedendem verflüssigten Gas aufweist und die Saugseite Mittel zum Ableiten des gasförmigen Kühlmediums besitzt.

5. Vorrichtung nach Anspruch 4,
dadurch gekennzeichnet,
daß das Mittel zur regelbaren Zufuhr des tiefsiedenden verlüssigten Gases aus einer in der Druckseite angeordneten Sprühdüse (11) besteht, welche über ein Regelventil (12) an einen Vorratsbehälter (13) für das tiefsiedende verflüssigte Gas angeschlossen ist.

6. Vorrichtung nach Anspruch 5,
dadurch gekennzeichnet,
daß das Regelventil an einen Temperaturregler (16) angeschlossen ist, welcher mit Temperaturfühlern (14,15) verbunden ist, die im Bereich der Anschlüsse zur Zufuhr und Ableitung des Kühlmediums an der Manschette angeordnet sind.

7. Vorrichtung nach einem der Ansprüch 4 bis 6,
dadurch gekennzeichnet,
daß das Mittel zur Ableitung des Kühlmediums aus einer in der Saugseite des Ventilators angeordneten Druckentlastungsklappe (18) besteht.

## Claims

1. Method of freezing liquid media in pipelines, in which a cold gaseous cooling medium obtained by evaporating a low-boiling liquefied gas is conducted through a sleeve which surrounds the pipe section to be frozen, characterized in that the cooling medium is conducted through the sleeve in circuit at adjustable temperatures and the temperature is maintained by controlled supply of low-boiling liquefied gas into the circuit gas and by conducting off a corresponding quantity of gaseous cooling medium.

2. Method according to Claim 1, characterized in that the cooling medium is adjusted to temperatures between -20°C and -160°C.

3. Method according to Claim 2, characterized in that the cooling medium is adjusted to temperatures between -20°C and -80°C.

4. Device for freezing liquid media in pipelines with a cold gaseous cooling medium obtained by evaporation of a low-boiling liquefied gas according to one of Claims 1 to 3, consisting of a sleeve for acting on the pipe surface with the cooling medium, which surrounds the pipe section to be frozen and has connections (4, 5) for supplying and conducting off the cooling medium, characterized in that the connection (4) for supplying the cooling medium is connected to the pressure side (7) and the connection (5) for conducting off the cooling medium is connected to the suction side (10) of a fan (8), the pressure side having means for the controllable supply of low-boiling liquefied gas and the suction side having means for conducting off the gaseous cooling medium.

5. Device according to Claim 4, characterized in that the means for the controllable supply of the low-boiling liquefied gas consists of a spray nozzle (11) which is arranged in the pressure side and is connected via a control valve (12) to a storage container (13) for the low-boiling liquefied gas.

6. Device according to Claim 5, characterized in that the control valve is connected to a temperature control (16) which is connected to temperature sensors (14, 15) which are arranged on the sleeve in the region of the connections for supplying and conducting off the cooling medium.

7. Device according to one of Claims 4 to 6, characterized in that the means for conducting off the cooling medium consists of a pressure-relief flap (18) arranged in the suction side of the fan.

## Revendications

1. Procédé pour la congélation de fluide dans des tubes, selon lequel on fait passer un fluide gazeux, froid obtenu par vaporisation d'un gaz liquifié à basse température d'ébullition, à travers un manchon entourant le segment de tuyau à congeler, caractérisé en ce qu'on conduit le fluide de refroidissement à des températures réglables dans le circuit traversant le manchon et on maintient la température par l'alimentation régulée du gaz liquéfié à basse température d'ébullition dans le circuit de gaz et par évacuation d'une quantité correspondante de fluide de refroidissement, gazeux.

2. Procédé selon la revendication 1, caractérisé en ce qu'on règle le fluide de refroidissement à des températures comprises entre -20°C et -160°C.

3. Procédé selon la revendication 2, caractérisé en ce que le fluide de refroidissement est réglé à des températures comprises entre -20°C et -80°C.

4. Dispositif pour congeler des fluides dans des tubes à l'aide d'un fluide refroidissement, gazeux, froid obtenu par vaporisation d'un gaz à basse température d'ébullition, selon l'une des revendications 1 à 3, composé d'un manchon entourant le segment de tuyau à congeler pour solliciter la surface du tuyau avec le fluide de refroidissement, ce manchon comportant les branchements (4, 5) pour l'alimentation et l'évacuation du fluide de refroidissement, caractérisé en ce que le branchement (4) d'alimentation du fluide de refroidissement est relié au côté de la pression (7) et le manchon (5) pour l'évacuation du fluide refroidissement est relié au côté d'aspiration (10) d'un ventilateur (8), le côté de pression comportant des moyens pour l'alimentation réglée de gaz liquéfié à basse température d'ébullition et le côté d'aspiration comporte des moyens pour évacuer le fluide de refroidissement gazeux.

5. Dispositif selon la revendication 4, caractérisé en ce que le moyen d'alimentation réglable du gaz liquéfié à basse température d'ébullition se compose d'une buse de pulvérisation (11) prévue du côté de la pression, cette buse étant reliée par une vanne de réglage (12), un réservoir d'alimentation (13) de gaz liquéfié à basse température d'ébullition.

6. Dispositif selon la revendication 5, caractérisé en ce que la vanne de réglage est reliée à un régulateur de température (16) lui-même relié à des capteurs de température (14, 15) placés au niveau des branchements pour l'alimentation et l'évacuation du fluide de refroidissement sur le manchon.

7. Dispositif selon l'une des revendications 4 à 6, caractérisé en ce que le moyen pour évacuer le fluide de refroidissement se compose d'un volet de décharge de pression (18) prévu sur le côté aspiration du ventilateur.
